# EUROPÄISCHE PATENTSCHRIFT

(11) **EP 0 995 122 B1**
(45) Veröffentlichungstag und Bekanntmachung des Hinweises auf die Patenterteilung: **06.08.2003**
(21) Anmeldenummer: 99934343.7
(22) Anmeldetag: 04.02.1999
(51) Int. Cl.: G01P 1/00, G01P 21/00, G01L 1/22, G01D 3/02

(54) **OFFSETREGELUNG**
OFFSET REGULATION DEVICE
DISPOSITIF DE REGLAGE DU DECALAGE

(30) Priorität: 18.02.1998 DE 19806752
(43) Veröffentlichungstag der Anmeldung: 26.04.2000
(73) Patentinhaber: Conti Temic microelectronic GmbH, 90411 Nürnberg (DE)
(72) Erfinder: BRINKS, Gerald, D-87448 Niedersonthofen (DE); OHGKE, Thomas, D-73230 Kircheim (DE); SCHUSTER, Günther, D-73108 Gammelshausen (DE)
(86) Internationale Anmeldenummer: EP9900741
(87) Internationale Veröffentlichungsnummer: WO99042842

(56) Entgegenhaltungen:
- EP-A- 0 406 735
- DE-A- 3 334 603

## Beschreibung

Die Erfindung **betrifft** eine Offsetregelung für ein Sensormodul, insbesondere für Beschleunigungssensoren und Drucksensoren, wobei die Offsetregelung einen Istwert erfaßt, diesen mit einem Sollwert vergleicht und bei einer Abweichung den erfaßten Wert auf den Sollwert regelt.

Es sind verschiedene Sensormodule bekannt, die eine Offsetregelung aufweisen. Hierbei werden Veränderungen des Nullpunkts, die auch als Offsetdrift bezeichnet werden, gemessen und mit Hilfe eines Regelkreises ausgeglichen. Diese Veränderungen können an den unterschiedlichsten Komponenten, insbesondere dem eigentlichen Sensorelement, welches zur Erfassung einer physikalischen Größe dient, und den Verbindungen zwischen Sensorelement und Signalverarbeitung auftreten. Die Ursachen für die Offsetdrifts liegen beispielsweise in der Alterung der Komponenten und Verbindungen oder sie können durch Temperaturveränderungen, die die Eigenschaften der Komponenten und deren Verbindungen beeinflussen, hervorgerufen werden. Mit der Offsetregelung können solche Einflüsse ausgeschaltet werden, indem ein Nullpunktabgleich stattfindet, so daß aufgrund einer Verschiebung des Nullpunkts das Meßergebnis nicht verfälscht wird. Viele Offsetregelungen sind als Hochpaßfilter ausgelegt, die zeitlich konstante Größen, wie beispielsweise die Nullpunktverschiebung eines Signals, herausfiltern. Eine solche gattungsbildende Offsetregelung ist beispielsweise in der DE 33 34 603 A1 offenbart. Hier wird ein Verfahren offenbart, bei dem das verstärkte Ausgangssignal eines Sensors in einem Komparator mit einer Vergleichsspannung verglichen wird und in Abhängigkeit des Ausgangssignals des Komparators das Ausgangssignal des Sensors in der erwünschten Weise erhöht oder erniedrigt.

**Nachteilig** bei einer solchen Offsetregelung ist jedoch, daß unzulässige Veränderungen des Nullpunktes durch defekte Teile, die beispielsweise zu schnell oder zu stark altern oder die eine überdurchschnittliche Temperaturempfindlichkeit aufweisen, nicht erkannt werden können. Übersteigt die zeitlich
konstante Größe einen bestimmten Maximal- oder Minimalwert so erkennt dies der Hochpaßfilter nicht. Übersteigt der Offset, welcher eine Nullpunktverschiebung darstellt, einen maximal bzw. minimal zulässigen Wert ist dies ein Anzeichen dafür, daß ein Bauteil nicht mehr funktionsfähig ist. Mit einem funktionsunfähigen Bauteil sind keine exakten Messungen mehr möglich, da sich ihr Verhalten so gravierend verändert, daß eine Reproduzierbarkeit des Meßergebnisses nicht mehr gewährleistet ist. Die Meßergebnisse, die sich trotz der Offsetregelung ergeben, sind falsch. Dies ist auch dann der Fall, wenn Bondverbindungen unterschiedlich altern und Kurzschlüsse auftreten.

Aus der **DE 33 34 603 A1** ist eine Verstärkeranordnung für einen Beschleunigungsaufnehmer bekannt, wobei zur Offsetkompensation das Ausgangssignal der Verstärkeranordnung in einem Komparator mit einer Vergleichsspannung in einem festen oder variablen Zeittakt verglichen wird. In Abhängigkeit des Ausgangssignals dieses Komparators wird im Zeittakt der Ausgangsstrom einer Stromquelle erhöht oder erniedrigt und zur Kompensation dem Verstärkereingang zugeführt.

**Nachteilig** hierbei ist jedoch, daß unzulässige Änderungen des Nullpunkts nicht erfaßt werden können und tatsächliche Fehler in der Schaltungsanordnung nicht nur nicht erkannt werden, sondern sogar kaschiert werden.

Aus der **DE 40 15 042 A1** ist eine Vorrichtung zur Analog-Digital-Wandlung einer Meßgröße, die von in Brückenschaltung angeordneten Sensoren erzeugt wird, insbesondere von Dehnungsmeßstreifen in einer Wägezeile, offenbart, bei der die Abweichung zwischen einer Meßgröße und einer dieser nachgeführten Kompensationsgröße einem Komparator zugeführt wird, der bei Vorhandensein dieser Abweichung ein binäres Steuersignal bildet. Ein Mikroprozessor verändert einen kodierten Steuerwert abhängig vom Vorhandensein bzw. Fehlen des binären Steuersignals. Ein Digital-Analog-Wandler führt schließlich entsprechend dem kodierten Steuerwert die Kompensationsgröße nach. Dabei kann der Nullpunkt-Offset- und Verstärkungsfehler der Vorrichtung bestimmt werden.

**Nachteilig** hierbei ist, dass der Nullpunkt-Offset nicht beurteilt wird. Das heißt, dass diese Vorrichtung eine fehlerhafte Schaltung nicht erfassen kann. Hierbei erfolgt keine Überprüfung, ob der Nullpunkt-Offset einen zulässigen Wert überschreitet, oder ob ständig ein neuer Nullpunkt eingestellt werden muß. Die Messung des Nullpunkt-Offsetfehlers dient nur zur schnellen Korrektur des kodierten Steuerwertes.

Die **EP 0 406 735 B1** offenbart ein Verfahren zur Messung der Spannung eines laufenden Fadens, bei dem nach jeder Unterbrechung des Fadenlaufs das angezeigte Ausgangssignal als neues Null-Punkt-Signal des nachfolgenden Fadenlaufzyklus verwendet wird. In dieser Veröffentlichung werden die Abweichungen zwischen dem aktuellen und dem vorangegangen Null-Punkt-Signal, die jeweils beim Fadenabriss gemessen werden, aufsummiert. Die Summe dieser Abweichungen wird mit einem vorgegebenen Abweichungssummengrenzwert verglichen, wobei ein Alarmsignal erzeugt wird, wenn der Abweichungssummengrenzwert überschritten wird.

**Nachteilig** hierbei ist jedoch, dass die Abweichung zwischen einem ersten und einem darauffolgenden Null-Punkt-Signal nur dann ermittelt werden kann, wenn der Faden abreißt, also die Regelung bereits versagt hat. Ferner müssen bei diesem Verfahren ständig die vorhergehende Null-Punkt-Signal-Werte abgespeichert werden, die für die Abweichung mit dem aktuellen Null-Punkt-Signal-Wert benötigt werden. Dazu werden überschreibbare Speichereinheiten benötigt.

Der Erfindung liegt daher die **Aufgabe** zugrunde, ein Verfahren für eine einfache Offsetregelung der eingangs genannten Art aufzuzeigen, mit der auch ein Defekt in der Schaltung erkannt werden kann.

Diese Aufgabe wird erfindungsgemäß durch die Merkmale in dem Kennzeichen des Patentanspruchs 1 **gelöst**. Hierbei beinhaltet die Offsetregelung eine Überwachungseinheit, mit der ein zu hoher Offset erkannt wird. Die Überwachungseinrichtung beinhaltet einen analogen oder digitalen, getakteten Summierer (23), wobei die Überwachungseinrichtung die mit einem beliebigen Faktor gewichtete Abweichung zwischen dynamischen Ist- und feststehendem Sollwert aufsummiert und bei Erreichen eines maximalen bzw. minimalen Grenzwertes eine Fehlermeldung erzeugt.

Dadurch wird verhindert, daß tatsächlich auftretende Fehler, die ansonsten beispielsweise durch die Hochpaßwirkung der Offsetregelung vertuscht werden, erkannt werden. Dabei ist es von Vorteil, daß die Offsetüberwachung während der Offsetregelung erfolgt und dadurch Fehler direkt bei der Messung erkannt werden können.

Weitere **vorteilhafte Weiterbildungen** ergeben sich aus den Unteransprüchen. Hier wird ein Verfahren für eine solche Offsetregelung offenbart, bei dem im Summierer jeder eingespeiste Wert mit einer festen Konstante gewichtet wird, wodurch die Schnelligkeit, mit dem der minimale oder maximale Grenzwert erreicht wird, festgelegt wird.

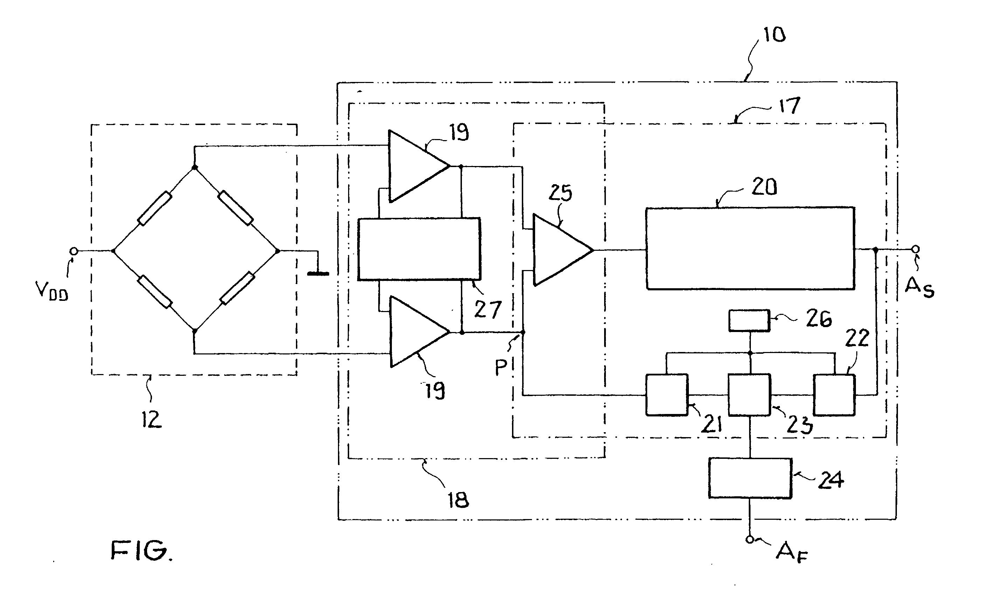

Im folgenden soll die Erfindung anhand von einem Ausführungsbeispiel im Zusammenhang mit der einzigen Figur dargestellt und erläutert werden.

Die einzige Figur zeigt eine Sensoreinrichtung mit einer Offsetkontrolleinheit und deren Funktionsprinzip. Die Offsetüberwachung als Bestandteil eines Regelkreises **17** überwacht die Signalverarbeitung **20** des Sensormoduls im integrierten Schaltkreis **10** und das Sensorelement **12** auf unzulässige Offsetdriften oder -werte. Diese Offsetüberwachung, welche im wesentlichen einen Summierer **23** beinhaltet, erkennt:
- eine unzulässige Offsetdrift des piezoresistiven Sensorelements **12** in Abhängigkeit von der Temperatur,
- eine unzulässige Offsetdrift des piezoresistiven Sensorelements **12** durch Alterung,
- eine unsymmetrische Alterung der Bondverbindung **V**_{**outpos**} und **V**_{**outneg**},
- Offsetdriften bzw. Offsetverschiebungen innerhalb der Signalverarbeitung **20** des Sensormoduls im integrierten Schaltkreis **10,** d.h. eine Einschränkung des Aussteuerbereichs, und
- ein Kurzschluß am Sensorausgang **A**_{**S**}**.**

In dieser Abbildung ist die Offsetüberwachung Bestandteil eines Regelkreises **17.** Der Regelkreis ist das Hochpassfilter des Sensormoduls. Er regelt das Ausgangssignal **A**_{**S**} des Sensormoduls auf V_{DD}/2 aus. Das dynamische Ausgangssignal **As** erzeugt einen dynamischen lstwert. Bei Offsetregelungen mittels Hochpaß werden nur kurzzeitige Beschleunigungssignale unverfälscht weitergegeben. Das System ist zu träge, um die kurzzeitigen Meßsignale, die vom Sensorelement herrühren, zu regeln. Die Regelung auf den Wert V_{DD}/2, der in diesem Ausführungsbeispiel den feststehenden Sollwert darstellt, erfolgt nur für ein zeitlich konstantes Signal, wie es für den Offset der Fall ist. Hierbei bedeutet zeitliche Konstanz nicht, daß das Signal tatsächlich die ganze Betriebsdauer über konstant bleiben muß, sondern nur über einen im Vergleich mit dem kurzzeitigen Meßsignal langen Zeitraum. Der Offset kann sich während des Betriebs auch allmählich ändern. Er wird dann beim Hochpaß trotzdem herausgefiltert. Der Hochpaßfilter besteht aus einer Differenzverstärkerschaltung **18,** welche wiederum Operationsverstärker **19, 20** und ein Verstärker **27** aufweist, der Signalverarbeitung **20** des Sensormoduls, einem Taktgeber **26,** einem A/D-Wandler **22,** einem digitalen Summierer **23** und einem D/A-Wandler **21.** Liegt bei dieser Schaltung zum Zeitpunkt t = 0 eine Offsetverschiebung V_{off} vor und die Offsetwerte liegen außerhalb der Spezifikation, dann kann z.B. ein abgerissener Bonddraht die Ursache hierfür sein. Als Folge wird die Spannung am Ausgang **A**_{**S**} von V_{DD}/2 abweichen. Der
A/D-Wandler **22** ist so ausgelegt, daß er im eingeschwungenen Zustand, wenn am Sensorausgang **A**_{**S**} V_{DD}/2 anliegt, den Ausgangswert NULL hat. Weicht das Signal am Sensorausgang **A**_{**S**} von V_{DD}/2 ab, nimmt er Werte größer oder kleiner als NULL an, je nachdem, ob die Ausgangsspannung kleiner oder größer als V_{DD}/2 ist. Mit jedem Taktpuls, welcher vom Taktgeber erzeugt wird, addiert der Summierer **23** das mit einer Konstante **C** gewichtete digitale Ausgangssignal des A/D-Wandlers **22** auf. Die Konstante C des digitalen Summieres **23** ist so zu wählen, daß der Regelkreis in Gegenkopplung arbeitet. Das heißt, daß am Punkt P immer ein Signal eingespeist wird, dessen Größe so ausgelegt ist, daß es der Abweichung von V_{DD}/2 am Ausgang **A**_{**S**} entgegenwirkt. Mit der Konstante **C** wird gleichzeitig die untere Grenzfrequenz des Hochpaßfilters eingestellt. Dadurch wird die Schnelligkeit im Falle eines Fehlers festgelegt, mit welchem der obere (in der Regel positive) oder untere (in der Regel negative) Grenzwert erreicht wird. Der D/A-Wandler **21** am Ausgang des digitalen Summierers **23** wandelt den digitalen Zahlenwert in eine analoge Spannungum undverschiebtdasPotential des Operationsverstärkers **25** im Punkt **P** solange, bis das Ausgangssignal **A**_{**S**} des Sensors V_{DD}/2 ist. Der digitale Summierer **23** kann als Minimum die Zahl 0, dies entspricht dem kleinsten (in der Regel negativen) Wert, und als Maximum die Zahl 2^{N}-1 (N-Bit-Summierer), dies entspricht dem höchsten in der Regel positiven Wert, darstellen. Der Wert 0 liegt bei diesem digitalen Summierer zwischen der Zahl 0 und der Zahl 2^{N}-1. Für den Fall, daß die Regelabweichung (Offsetverschiebung) außerhalb der Spezifikation liegt, addiert der Summierer solange die Ausgangssignale am A/D-Wandler **22** auf, bis er seinen minimalen (negativen) oder maximalen (positiven) Zahlenwert erreicht. Die Extremwerte 0 und 2^{N}-1 werden von der Überwachungseinheit **24** erkannt und der Fehler-Statusausgang **A**_{**F**} auf Fehler-Status NULL gesetzt.

In dem gezeigten Anwendungsbeispiel werden die Komponenten sowohl von der Offsetregelung als auch von der Offsetüberwachung genutzt. Das Aufsummieren der Abweichung von V_{DD}/2 erfolgt beim Regeln. Dauert die Regelung auf V_{DD}/2 zu lange, weil die Abweichung zu groß ist, so erkennt das System die zu große unzulässige Abweichung und zeigt dies an.

Der digitale Summierer mit dem Taktgeber, dem A/D-Wandler und dem D/A-Wandler kann auch durch einen analogen Summierer ersetzt werden.

Auch sind zur Realisierung des Differenzverstärkers andere Schaltungen zulässig.

## Patentansprüche

1. Verfahren zur Offsetregelung eines von einem Sensormodul erzeugten Ausgangssignals (Aₛ), bei dem
- ein vom Ausgangssignal (Aₛ) abhängiger dynamischer Istwert erzeugt wird,
- dieser dynamische Istwert mit einem abgespeicherten, feststehenden Sollwert verglichen wird und
- bei einer Abweichung von feststehenden Soll- und dynamischen Istwert das Ausgangssignal (A_{S}) verändert wird und dadurch ein neuer dynamischer Istwert erzeugt wird, dessen Abweichung zum feststehenden Sollwert geringer ist,
wobei
- der Wert der Abweichung zwischen dem dynamischen oder neuen dynamischen Ist- und dem feststehenden Sollwert erfaßt wird,
- die aufeinanderfolgenden Werte der Abweichung von einem getaktetem Summierer aufsummiert werden und
- bei Erreichen eines maximalen bzw. minimalen Grenzwertes eine Fehlermeldung erzeugt wird.

2. Verfahren zur Offsetregelung nach Anspruch 1, wobei der Wert der Abweichung mit einer festgelegten Konstante (C) gewichtet wird, wodurch die Summe der aufeinanderfolgenden Werte der Abweichungen und damit die Geschwindigkeit mit welcher der Grenzwert erreicht wird, verändert wird.

3. Verfahren zur Offsetregelung nach Anspruch 1, wobei die Offsetregelung als Hochpaßfilter wirkt.

## Claims

1. A method for offset control of an output signal (Aₛ) generated by a sensor module in which
- a dynamic actual value depending upon said output signal (Aₛ) is generated,
- this dynamic actual value is compared with a stored fixed set value, and
- in case of a difference between said fixed set value and said dynamic actual value, said output signal (Aₛ) is modified to generate a new dynamic actual value having a smaller difference to said fixed set value,
**wherein**
- the value of the difference between said dynamic or new dynamic actual value and said fixed set value is detected,
- the subsequent values of difference are summed up by a cycled summation device, and
- an error message is generated when a maximum or minimum limit is reached.

2. A method for offset control according to claim 1, wherein the value of difference is weighed at a predetermined constant (C) to alter the sum of said subsequent values of difference and thus the speed at which the limit is reached.

3. A method for offset control according to claim 1, wherein said offset control works as high band filter.

## Revendications

1. Procédé pour la régulation offset d'un signal de sortie (Aₛ) généré par un module de senseur, où
- une valeur effective dynamique fonction du signal de sortie (Aₛ) est générée,
- ladite valeur effective dynamique est comparée à une valeur de consigne mémorisée fixe,
- le signal de sortie (Aₛ) est modifié en cas d'écart entre la valeur de consigne fixe et la valeur effective dynamique, une nouvelle valeur effective dynamique étant par là générée, dont l'écart à la valeur de consigne fixe est moindre,
et où
- la valeur de l'écart entre la valeur effective dynamique, ou la nouvelle valeur effective dynamique, et la valeur de consigne fixe est saisie,
- les valeurs successives de l'écart sont totalisées par un additionneur rythmé, et
- un message d'erreur est généré si une valeur limite maximale ou minimale est atteinte.

2. Procédé pour la régulation offset selon revendication 1, où la valeur de l'écart est pondérée par une constante définie (C), modifiant le total des valeurs successives des écarts et donc la vitesse avec laquelle la valeur limite est atteinte.

3. Procédé pour la régulation offset selon revendication 1, où la régulation offset agit comme filtre passe-haut.
